# EUROPÄISCHE PATENTSCHRIFT

(11) **EP 4 424 944 B1**
(45) Veröffentlichungstag und Bekanntmachung des Hinweises auf die Patenterteilung: **30.04.2025**
(21) Anmeldenummer: 23159887.1
(22) Anmeldetag: 03.03.2023
(51) Int. Cl.: E04D 13/14, F24S 25/61, H01Q 1/12, E04H 12/22, E04D 13/00

(54) **FLACHDACHAUFBAUTEN-STÜTZE**
FLAT ROOF SUPPORT
SUPPORT DE STRUCTURE DE TOIT PLAT

(43) Veröffentlichungstag der Anmeldung: 04.09.2024
(73) Patentinhaber: Ed. Züblin Aktiengesellschaft, 70567 Stuttgart (DE)
(72) Erfinder: Jaguste, Bernd, 12103 Berlin (DE)
(74) Vertreter: Karzel, Philipp

(56) Entgegenhaltungen:
- DE-C2- 3 148 046
- JP-B2- 4 653 578

## Beschreibung

Die durch ein Flachdach zur Verfügung stehende Fläche wird oftmals zur Anordnung von technischer Gebäudeausrüstung oder Dachterrassen oberhalb des Flachdachs genutzt. Derartige fest oberhalb des Flachdachs zu montierende Objekte werden mittels einer Flachdachaufbauten-Stütze dauerhaft auf dem Flachdach abgestützt. Zu Inspektionszwecken ragt die Flachdachaufbauten-Stütze mindestens 50 cm über die Oberkante des Flachdachaufbaus hervor. Derartige Flachdachaufbauten-Stützen werden individuell gefertigt und bestehen aus einem hohlzylindrischen Rohr, an dessen beiden Enden jeweils Platten angeschweißt sind. Nach dem Anschweißen der Platten werden Entlüftungsöffnungen in das Rohr eingebracht, um ein anschließendes Verzinken der Flachdachaufbauten-Stütze auch auf ihrer Innenseite zu ermöglichen. Dennoch gestaltet sich das Aufbringen der Zinkschicht schwierig. Es kann nicht kontrolliert werden, ob das Zink an jede Stelle im Innenraum des hohlzylindrischen Rohrs der Dachaufbauten-Stütze gelangt. In der Folge ist es ungewiss, ob die Dachaufbauten-Stütze ausreichend gegen Korrosion geschützt ist.

Aus der DE 31 48 046 C2 ist ein auf einem Gebäudedach zu befestigender Verankerungspflock mit einem Rohr bekannt, das mit einer Verankerungsplatte verschweißt und nach oben hin offen ist. Es weist einen eingeschweißten Ring mit Innengewinde auf, in das eine Haube mit einem rohrförmigen Außengewindestück geschraubt ist.

Aus der JP 4 653 578 B2 ist eine zweiteilige Dachaufbautenstütze bekannt.

Der Erfindung liegt die Aufgabe zugrunde, eine langlebige Flachdachaufbauten-Stütze zur Verfügung zu stellen.

Diese Aufgabe wird durch eine Flachdachaufbauten-Stütze mit den Merkmalen des Anspruchs 1 gelöst.

Eine weitere Aufgabe der Erfindung besteht darin, ein Verfahren zur Herstellung einer Flachdachaufbauten-Stütze zur dauerhaften Abstützung eines fest oberhalb eines Flachdachs zu montierenden Objekts auf dem Flachdach anzugeben, mit dem eine langlebige Flachdachaufbauten-Stütze hergestellt werden kann.

Diese Aufgabe wird durch ein Verfahren mit den Merkmalen des Anspruchs 11 gelöst.

Die erfindungsgemäße Flachdachaufbauten-Stütze umfasst ein unteres Rohrelement und ein oberes Rohrelement. Das untere Rohrelement ist getrennt vom oberen Rohrelement ausgebildet. Der Fuß der Flachdachaufbauten-Stütze ist an dem unteren Rohrelement angeordnet. Der Kopf der Flachdachaufbauten-Stütze ist an dem oberen Rohrelement angeordnet. Das untere Rohrelement besitzt ein oberes Rohrelementende. Das obere Rohrelementende ist dem am unteren Rohrelement angeordneten Fuß abgewandt. Das obere Rohrelement besitzt ein unteres Rohrelementende. Das untere Rohrelementende ist dem am oberen Rohrelement angeordneten Kopf abgewandt. Das untere Rohrelementende ist an seinem oberen Rohrelementende offen. Das obere Rohrelementende ist an seinem unteren Rohrelementende offen. Die Flachdachaufbauten-Stütze umfasst eine Verbindungsvorrichtung zur Verbindung des unteren Rohrelements mit dem oberen Rohrelement.

Dadurch, dass die Flachdachaufbauten-Stütze als Bestandteile zumindest das untere Rohrelement und das obere Rohrelement umfasst, und dadurch, dass die beiden Rohrelemente jeweils an den im zusammengebauten Zustand einander zugewandten Enden offen sind, kann auf einfache Weise ein Korrosionsschutz, insbesondere ein vollflächiger Korrosionsschutz auch auf die Innenseite der Rohrelemente aufgebracht werden. Die Innenseiten sind dadurch leicht zugänglich und der Korrosionsschutz kann ohne Hindernisse aufgebracht werden. Eine anschließende Sichtkontrolle, ob die Innenseite vollständig vor Korrosion geschützt ist, ist ohne weiteres möglich. Die erfindungsgemäße Flachdachaufbauten-Stütze kann aufgrund der Zweiteiligkeit zuverlässig vollflächig korrosionsgeschützt hergestellt werden. Dies ist im Stand der Technik nicht möglich.

Aufgrund des Aufbaus der Flachdachaufbauten-Stütze aus dem unteren Rohrelement und dem oberen Rohrelement kann die Flachdachaufbauten-Stütze auf einfache Weise auch im Inneren wärmegedämmt werden. Hierzu wird vor der Verbindung des unteren Rohrelements mit dem oberen Rohrelement mittels der Verbindungsvorrichtung ein inneres Dämmelement in das Innere des oberen oder des unteren Rohrelements eingebracht und dann erst das obere Rohrelement oder das untere Rohrelement mit dem jeweils anderen Rohrelement mittels der Verbindungsvorrichtung verbunden. Auch dies ist im Stand der Technik nicht möglich. Je nach Einbausituation kann vor Ort auf der Baustelle entschieden werden, ob ein inneres Dämmelement eingebracht werden soll oder nicht.

Weiterhin ist bei der erfindungsgemäßen Flachdachaufbauten-Stütze aufgrund der getrennten Ausbildung des unteren Rohrelements und des oberen Rohrelements eine Einstellung einer Stützhöhe der Flachdachaufbauten-Stütze möglich. Die Ausbildung der Flachdachaufbauten-Stütze durch ein unteres Rohrelement und ein oberes Rohrelement ermöglicht eine Relativbewegung des unteren Rohrelements gegenüber dem oberen Rohrelement zur Einstellung der Stützhöhe. Die Einstellung der Stützhöhe kann vor Ort auf der Baustelle flexibel und unkompliziert erfolgen.

Die erfindungsgemäße Gestaltung der Flachdachaufbauten-Stütze durch das untere Rohrelement und das getrennt vom unteren Rohrelement ausgebildete obere Rohrelement ermöglicht den Einsatz der Flachdachaufbauten-Stütze für eine Vielzahl von Anwendungsfällen. Es ist nicht mehr wie im Stand der Technik erforderlich, jede Flachdachaufbauten-Stütze speziell für einen konkreten Anwendungsfall anfertigen zu müssen, sondern die erfindungsgemäße Flachdachaufbauten-Stütze kann an die jeweiligen Einsatzbedingungen bezüglich Stützhöhe und Wärmedämmung angepasst werden. Durch die erfindungsgemäße Flachdachaufbauten-Stütze ist eine Standardstütze zur Verfügung gestellt. Die Einführung eines solchen Standards spart hinsichtlich der Planung und der Fertigung der Flachdachaufbauten-Stütze Zeit und Kosten. Statik und Wärmeschutz müssen nicht mehr für jedes konkrete Bauprojekt einzeln berechnet werden, sondern können für die erfindungsgemäße Flachdachaufbauten-Stütze einmalig berechnet werden. Die standardisierte Ausführung der Flachdachaufbauten-Stütze ermöglicht eine kostengünstige Herstellung in großer Stückzahl. Die erfindungsgemäße Flachdachaufbauten-Stütze kann auf Vorrat produziert werden und bei Anwendungsbedarf schnell und günstig ausgeliefert werden. Die mühsame und zeitintensive Suche nach einem Schlosser, der die Flachdachaufbauten-Stützen für das konkrete Bauprojekt speziell anfertigt, entfällt.

Eine fachgerechte und dauerhaft dichte Abdichtung der die Dachabdichtung durchdringende Flachdachaufbauten-Stütze war bisher nicht möglich. Die erfindungsgemäße Flachdachaufbauten-Stütze ermöglicht aufgrund der Trennung in ein unteres und ein oberes Rohrelement eine einfache und zuverlässige Abdichtung eines Übergangs zwischen der Flachdachaufbauten-Stütze und dem Flachdach. Aufgrund der Trennung in oberes und unteres Rohrelement kann bei der Montage der erfindungsgemäßen Flachdachaufbauten-Stütze zunächst das untere Rohrelement auf dem Flachdach fixiert werden und anschließend ein Dichtelement, insbesondere ein schlauchförmiges Dichtelement, bevorzugt ein Schrumpfschlauch, so über das untere Rohrelement oder das obere Rohrelement gestülpt werden, dass das untere Rohrelement oder das obere Rohrelement das Dichtelement vollständig durchdringt. Das Dichtelement kann dann später zum Übergang zwischen dem unteren Rohrelement und dem Flachdach oder dem oberen Rohrelement und dem Flachdach gezogen werden und dort seine Dichtfunktion erfüllen. Insbesondere kann das Dichtelement dort durch Erwärmung geschrumpft werden. Zweckmäßig kann der aus der Dachabdichtung herausragende Teil des Dichtelements durch Erwärmung auf das obere Rohrelement oder das untere Rohrelement aufgeschrumpft werden. Dadurch ist eine sehr einfache und effiziente Abdichtung des Übergangs zwischen Flachdachaufbauten-Stütze und Flachdach möglich. Hierdurch ist kann die Flachdachaufbauten-Stütze fach- und normgerecht in die Dachabdichtung eingebunden werden. Die Verwendung eines schlauchförmigen Dichtelements ist im Stand der Technik aufgrund der Begrenzung der beiden Enden der rohrförmigen Stütze durch jeweils eine über die Mantelfläche des Rohrs überstehende Platte nicht möglich.

Vorteilhaft ist das untere Rohrelement mittels der Verbindungsvorrichtung derart mit dem oberen Rohrelement verbindbar, dass das untere Rohrelement und das obere Rohrelement einen gemeinsamen Hohlraum begrenzen. Dieser Hohlraum kann für die Aufnahme eines Dämmelements zur thermischen Isolierung der Flachdachaufbauten-Stütze genutzt werden. Bei den bisherigen einteiligen Stützen konnte der Stützenhohlraum nur ausgeschäumt werden, wobei sich zwangsläufig größere Hohlräume bilden. Durch Luftkonvektion reduzieren diese Hohlräume den Wärmedämmwert der Konstruktion deutlich. Der hier beschriebene, durch das untere Rohrelement und das oberer Rohrelement begrenzte Hohlraum kann mühelos mittels eines als Dämmstoffkern ausgebildeten Dämmelements ausgefüllt werden. Hierdurch ist eine mangelfreie Dämmung des Hohlraums sichergestellt.

Der durch das untere Rohrelement und das oberer Rohrelement begrenzte Hohlraum kann im getrennten Zustand der beiden Rohrelemente auf einfache Weise vor Korrosion geschützt werden. Insbesondere kann im getrennten Zustand auf einfache Weise ein Korrosionsschutz aufgebracht werden.

Zweckmäßig sind das obere Rohrelement und das untere Rohrelement mittels der Verbindungsvorrichtung frei von einer stoffschlüssigen Verbindung miteinander verbindbar. Dies ermöglicht eine einfache und schnelle Verbindung des unteren Rohrelements mit dem oberen Rohrelement. Insbesondere sind das obere Rohrelement und das untere Rohrelement mittels der Verbindungsvorrichtung werkzeuglos miteinander verbindbar.

Zweckmäßig umfasst die Verbindungsvorrichtung eine Schraubverbindung. Bevorzugt sind ein erster Teil der Schraubverbindung an dem unteren Rohrelement und ein zweiter Teil der Schraubverbindung an dem oberen Rohrelement ausgebildet. Bevorzugt sind das untere Rohrelement und das obere Rohrelement mittels der Schraubverbindung werkzeuglos miteinander verbindbar.

Die Flachdachaufbauten-Stütze besitzt eine in ihrer Längsrichtung gemessene Stützhöhe. Die Flachdachaufbauten-Stütze ist insbesondere so ausgelegt, dass die Stützhöhe durch eine Relativbewegung des unteren Rohrelements und des oberen Rohrelements zueinander einstellbar ist. Insbesondere kann die Stützhöhe durch ein stückweises Verdrehen der Schraubverbindung in Löserichtung oder ein stückweises Verdrehen der Schraubverbindung in Schließrichtung eingestellt werden. Durch die Einstellbarkeit der Stützhöhe kann die Flachdachaufbauten-Stütze schnell und einfach an verschiedene Einsatzbedingungen hinsichtlich der erforderlichen Stützhöhe angepasst werden. Im Rohbau sind Toleranzen von ± 2 cm zulässig. Durch die schnelle Höhenanpassung über die Schraubverbindung ist der Ausgleich von Rohbautoleranzen mühelos ausführbar. Hierbei ist keine erneute Berechnung der Statik erforderlich. Dadurch können Zeit und Kosten eingespart werden. Insbesondere muss nicht für eine Sonderanfertigung ein Auftrag vergeben werden. Dies erspart die zeit- und kostenintensive Suche nach einem Schlosser. Die Flachdachaufbauten-Stütze kann für verschiedene Einsatzzwecke gelagert und vorgehalten werden. Dadurch ist ein schneller Einsatz der Flachdachaufbauten-Stütze möglich.

Vorteilhaft besitzt die Flachdachaufbauten-Stütze ein Sperrelement zur Sperrung einer Relativbewegung zwischen dem oberen Rohrelement und dem unteren Rohrelement. Dadurch kann die Verbindung zwischen dem oberen Rohrelement und dem unteren Rohrelement mittels der Verbindungsvorrichtung gesichert werden. Insbesondere kann nach Einstellen der gewünschten Stützhöhe der Flachdachaufbauten-Stütze eine Relativbewegung zwischen dem unteren Rohrelement und dem oberen Rohrelement unterbunden werden und so die Flachdachaufbauten-Stütze in der gewünschten Stützhöhe fixiert werden. Vorteilhaft kann ein Verdrehen des oberen Rohrelements relativ zu dem unteren Rohrelement mittels des Sperrelements verhindert werden. Insbesondere kann die Schraubverbindung zwischen unterem Rohrelement und oberem Rohrelement mittels des Sperrelements gegen ein Verdrehen gesichert werden.

Erfindungsgemäß ist vorgesehen, dass die Flachdachaufbauten-Stütze ein inneres Dämmelement zur thermischen Isolierung besitzt. Das innere Dämmelement ist sowohl in dem oberen Rohrelement als auch in dem unteren Rohrelement angeordnet. Bevorzugt erstreckt sich das Dämmelement in Längsrichtung der Flachdachaufbauten-Stütze vom Fuß bis zum Kopf der Flachdachaufbauten-Stütze. Durch das innere Dämmelement ist eine gute thermische Isolierung der Flachdachaufbauten-Stütze möglich. Aufgrund der zumindest zweigeteilten Gestaltung der Flachdachaufbauten-Stütze kann das innere Dämmelement auf einfache Weise in ein offenes Ende des unteren Rohrelements oder des oberen Rohrelements eingebracht werden. Bei der anschließenden Verbindung des unteren Rohrelements und des oberen Rohrelements miteinander kann das innere Dämmelement in das jeweils andere Rohrelement eingeführt werden. Erfindungsgemäß ragt das innere Dämmelement derart aus dem unteren Rohrelement heraus, dass beim Verbinden des unteren Rohrelements mit dem oberen Rohrelement das obere Rohrelement über das innere Dämmelement gestülpt werden kann. Insbesondere ist das innere Dämmelement ein weicher Dämmstoffkern. Dadurch ist eine Höhenanpassung der Dachaufbauten-Stütze problemlos möglich. Das als weicher Dämmstoffkern ausgebildete Dämmelement kann auf die erforderliche Höhe zusammengedrückt werden und den vom oberen Rohrelement und vom unteren Rohrelement begrenzten Hohlraum vollständig ausfüllen.

Insbesondere sind sowohl das obere Rohrelement als auch das untere Rohrelement vollflächig verzinkt. Insbesondere sind das obere Rohrelement und das untere Rohrelement auf ihren jeweiligen Innenseiten vollflächig verzinkt. Dadurch ist ein guter Korrosionsschutz möglich. Aufgrund der zumindest zweigeteilten Gestaltung der Flachdachaufbauten-Stütze mit einem unteren Rohrelement und einem oberen Rohrelement und da das untere und das oberen Rohrelementende jeweils offen sind, kann die Verzinkung auf einfache Weise vorgenommen und kontrolliert werden. Das Zink kann durch das obere bzw. das untere Rohrende in die beiden Rohrelemente eingebracht werden. Anschließend kann auf einfache Weise mittels einer Sichtkontrolle festgestellt werden, ob die gesamte Innenfläche des jeweiligen Rohrelements vollständig durch Zink vor Korrosion geschützt ist. Ebenfalls kann kontrolliert werden, ob die Außenseite des jeweiligen Rohrelements vollständig durch Zink vor Korrosion geschützt ist. Bei den bisherigen einteiligen Stützen erfolgte die Verzinkung über eine kleine Verzinkungsöffnung und eine kleine Entlüftungsöffnung. Die Kontrolle, ob der Hohlraum vollständig verzinkt wurde, war so kaum möglich und konnte auf der Baustelle nicht durchgeführt werden.

In vorteilhafter Weiterbildung der Erfindung umfasst die Flachdachaufbauten-Stütze ein Dichtelement. Insbesondere ist das Dichtelement schlauchförmig. Bevorzugt ist das Dichtelement ein Schrumpfschlauch. Das Dichtelement dient zur Abdichtung des Übergangs zwischen der Flachdachaufbauten-Stütze und einem Flachdach, insbesondere gegenüber Flüssigkeit. Dadurch, dass die Flachdachaufbauten-Stütze ein unteres Rohrelement und ein getrennt davon ausgebildetes oberes Rohrelement umfasst, kann bei der Montage der Flachdachaufbauten-Stütze zunächst das Dichtelement, insbesondere das schlauchförmige Dichtelement, über das untere Rohrelement oder das obere Rohrelement gestülpt werden. Hierbei kann das untere Rohrelement oder das obere Rohrelement durch das Dichtelement gesteckt werden. Nach dem Zusammenbau des unteren Rohrelements und des oberen Rohrelements und/oder nach der Montage des unteren Rohrelements auf dem Flachdach, kann das Dichtelement auf einfache Weise zum Übergang zwischen dem unteren Rohrelement oder dem oberen Rohrelement und dem Flachdach bewegt werden und dort für Abdichtung sorgen. Insbesondere kann das Dichtelement an der Stelle des Übergangs zwischen dem unteren Rohrelement oder dem oberen Rohrelement und dem Flachdach erhitzt werden und sich dichtend sowohl an das Flachdach als auch an das untere Rohrelement oder das obere Rohrelement anlegen. Dadurch ist eine effiziente und einfache Abdichtung des Übergangs zwischen Flachdach und der Flachdachaufbauten-Stütze möglich. Es kann auch vorgesehen sein, dass das Dichtelement eine Verbindungsstelle zwischen dem unteren Rohrelement und dem oberen Rohrelement abdichtet, insbesondere zusätzlich zur Abdichtung des Übergangs zwischen der Flachdachaufbauten-Stütze und dem Flachdach.

Vorteilhaft umfasst die Flachdachaufbauten-Stütze eine äußere Dämmmanschette zur thermischen Isolierung. Insbesondere umschließt die äußere Dämmmanschette zumindest das obere Rohrelement. Zweckmäßig umschließt die äußere Dämmmanschette die Flachdachaufbauten-Stütze in Umfangsrichtung um die Längsrichtung der Flachdachaufbauten-Stütze vollständig. Insbesondere erstreckt sich die äußere Dämmmanschette vom Flachdach bis zum Kopf der Flachdachaufbauten-Stütze. Dadurch ist auf einfache Weise eine gute thermische Isolierung der Flachdachaufbauten-Stütze möglich. Es kann auch vorgesehen sein, dass die äußere Dämmmanschette sowohl das obere Rohrelement als auch das untere Rohrelement umschließt.

Gemäß des erfindungsgemäßen Verfahrens zur Herstellung einer Flachdachaufbauten-Stütze zur dauerhaften Abstützung eines fest oberhalb eines Flachdachs zu montierenden Objekts auf dem Flachdach wird bei der Montage der Flachdachaufbauten-Stütze auf dem Flachdach zunächst das untere Rohrelement mit seinem Fuß auf dem Flachdach befestigt. In einem nachfolgenden Verfahrensschritt wird das obere Rohrelement mit seinem unteren Rohrelementende mit dem oberen Rohrelementende des unteren Rohrelements verbunden. Diese Montageart ermöglicht die Herstellung des oberen Rohrelements und des unteren Rohrelements so, dass ein effizienter und zuverlässiger Korrosionsschutz der beiden Rohrelemente möglich ist. Der Korrosionsschutz kann vor der Montage der Flachdachaufbauten-Stütze im Werk vorgenommen werden. Hierbei ist es nicht erforderlich, wie im Stand der Technik Belüftungsöffnungen in die Flachdachaufbauten-Stütze einzubringen. Durch die offene Gestaltung der Rohrelemente an ihren Rohrelementenden kann während der Herstellung eines Korrosionsschutzes, beispielsweise durch Verzinken, ein ausreichender Luftaustausch erfolgen.

Ebenso ist durch das erfindungsgemäße Montageverfahren eine einfache Einbringung eines Dämmelements in das Innere des unteren oder des oberen Rohrelements möglich. Auf diese Weise kann die Flachdachaufbauten-Stütze auf einfache Weise thermisch isoliert werden.

Aufgrund des erfindungsgemäßen Herstellungsverfahrens der Flachdachaufbauten-Stütze ist es möglich, die Flachdachaufbauten-Stütze höhenverstellbar zu gestalten. Dadurch ist eine Anpassung an verschiedene Einsatzbedingungen hinsichtlich der Stützhöhe der Flachdachaufbauten-Stütze möglich. Dies ermöglicht ein standardisiertes Herstellungsverfahren mit einer einmaligen Auslegung hinsichtlich Statik und Wärmedämmung. Eine zeit- und kostenintensive Einzelanfertigung der Flachdachaufbauten-Stütze kann durch das erfindungsgemäße Verfahren vermieden werden.

Das erfindungsgemäße Verfahren ermöglicht ebenfalls eine einfache Abdichtung des Übergangs zwischen Flachdachaufbauten-Stütze und Flachdach. Hierbei kann, bevor das obere Rohrelement mit dem unteren Rohrelement verbunden wird, ein Dichtelement, insbesondere ein schlauchförmiges Dichtelement, bevorzugt ein Schrumpfschlauch, über das untere Rohrelement oder das obere Rohrelement gestülpt werden und später an die Stelle des Übergangs gezogen werden. Dort kann das Dichtelement abdichtend wirken. Insbesondere kann das Dichtelement dort durch Erwärmung geschrumpft werden. Dadurch ist eine effiziente und einfache Art der Abdichtung des Übergangs zwischen Flachdach und Flachdachaufbauten-Stütze möglich.

Nach dem erfindungsgemäßen Verfahren ist vorgesehen, dass vor dem Verbinden des unteren Rohrelements mit dem oberen Rohrelement ein inneres Dämmelement zur thermischen Isolierung der Flachdachaufbauten-Stütze in das untere Rohrelement eingebracht wird. Zweckmäßig wird das innere Dämmelement nach der Befestigung des unteren Rohrelements mit seinem Fuß auf dem Flachdach zur thermischen Isolierung der Flachdachaufbauten-Stütze in das untere Rohrelement eingebracht. Erfindungsgemäß wird das innere Dämmelement so in das untere Rohrelement eingebracht, dass das innere Dämmelement aus dem unteren Rohrelement herausragt und dann beim Verbinden des unteren Rohrelements mit dem oberen Rohrelement das obere Rohrelement über das innere Dämmelement gestülpt wird. Zweckmäßig wird das innere Dämmelement dann im oberen Rohrelement aufgenommen. Insbesondere erstreckt sich das innere Dämmelement nach der Aufnahme im Inneren der Flachdachaufbauten-Stütze vom Fuß der Flachdachaufbauten-Stütze in Längsrichtung der Flachdachaufbauten-Stütze bis zum Kopf der Flachdachaufbauten-Stütze. Dadurch ist eine einfache und effiziente thermische Isolierung der Flachdachaufbauten-Stütze möglich. Insbesondere ist das innere Dämmelement ein weicher Dämmstoffkern. Dadurch ist eine Höhenanpassung der Dachaufbauten-Stütze problemlos möglich. Das als weicher Dämmstoffkern ausgebildete Dämmelement kann auf die erforderliche Höhe zusammengedrückt werden und den vom oberen Rohrelement und vom unteren Rohrelement begrenzten Hohlraum vollständig ausfüllen.

Zweckmäßig ist das Verfahren dadurch erweitert, dass vor dem Verbinden des unteren Rohrelements mit dem oberen Rohrelement ein Dichtelement, insbesondere ein Schrumpfschlauch, zur Abdichtung des Übergangs zwischen der Flachdachaufbauten-Stütze und dem Flachdach über das untere Rohrelement oder das obere Rohrelement gestülpt wird. Dadurch kann der Übergang zwischen Flachdach und Flachdachaufbauten-Stütze mittels des Dichtelements auf einfache Weise abgedichtet werden. Insbesondere ist vorgesehen, dass das Dichtelement nach der Befestigung des unteren Rohrelements mit seinem Fuß auf dem Flachdach zur Abdichtung des Übergangs zwischen der Flachdachaufbauten-Stütze und dem Flachdach über das untere Rohrelement oder das obere Rohrelement gestülpt wird.

Insbesondere wird bei dem Verfahren eine in Längsrichtung der Flachdachaufbauten-Stütze gemessene Stützhöhe der Flachdachaufbauten-Stütze durch Bewegung des oberen Rohrelements relativ zu dem unteren Rohrelement eingestellt. Zweckmäßig erfolgt die Einstellung der Stützhöhe durch eine Verbindungsvorrichtung, die insbesondere als Schraubverbindung ausgebildet ist. Vorteilhaft sind ein erster Teil der Schraubverbindung an dem unteren Rohrelement und ein zweiter Teil der Schraubverbindung an dem oberen Rohrelement angeordnet. Insbesondere wird das obere Rohrelement anschließend an die Einstellung der Stützhöhe gegen eine Bewegung relativ zu dem unteren Rohrelement mittels eines Sperrelements gesichert. Dadurch ist die Stützhöhe dauerhaft sicher eingestellt.

Insbesondere werden sowohl das obere Rohrelement als auch das untere Rohrelement zeitlich vor dem Verbinden des unteren Rohrelements mit dem oberen Rohrelement vollflächig verzinkt. Zweckmäßig werden sowohl das obere Rohrelement als auch das untere Rohrelement vor der Montage der Flachdachaufbauten-Stütze vollflächig verzinkt. Insbesondere werden hierbei die jeweiligen Innenseiten des unteren Rohrelements und des oberen Rohrelement vollflächig verzinkt. Dadurch kann auf einfache Weise ein zuverlässiger Korrosionsschutz der Flachdachaufbauten-Stütze sowohl an der Innen- als auch an der Außenseite hergestellt werden.

Ein Ausführungsbeispiel der Erfindung wird im Folgenden anhand der Zeichnung erläutert. Es zeigt:

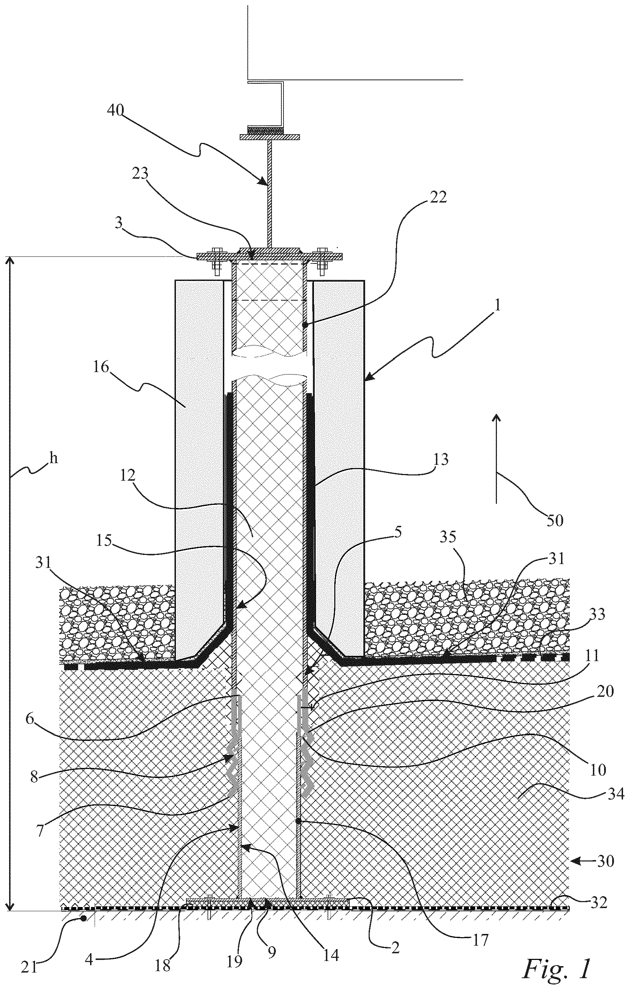

- Fig. 1: eine schematische Schnittdarstellung einer auf einem Flachdach montierten Flachdachaufbauten-Stütze mit einem darauf angeordneten, durch die Flachdachaufbauten-Stütze abgestützten Objekt.

Fig. 1 zeigt eine Flachdachaufbauten-Stütze 1. Die Flachdachaufbauten-Stütze 1 dient zur dauerhaften Abstützung eines fest oberhalb eines Flachdachs 30 zu montierenden Objekts 40. Hierzu ist die Flachdachaufbauten-Stütze 1 auf dem Flachdach 30, insbesondere auf einer Decke 21 des Flachdachs 30, angeordnet. Im Ausführungsbeispiel ragt die Flachdachaufbauten-Stütze 1 aus dem Dachaufbau des Flachdachs 30 heraus.

Das Flachdach 30 ist auf der Decke 21 eines Gebäudes ausgebildet. Üblicherweise handelt es sich bei der Decke 21 um eine Stahlbetondecke. Die Decke 21 ist Bestandteil des Flachdachs 30. Auf der Decke 21 des Gebäudes ist eine Dampfsperre 32 angeordnet. Die Dampfsperre 32 ist Bestandteil des Flachdachs 30. Die Dampfsperre 32 deckt die Decke 21 vollflächig ab. Auf der Decke 21, im Ausführungsbeispiel auf der Dampfsperre 32 ist die Flachdachaufbauten-Stütze 1 angeordnet. Die Flachdachaufbauten-Stütze 1 ist zur Anordnung auf einem Flachdach 30 vorgesehen. Die Flachdachaufbauten-Stütze 1 ist auf dem Flachdach 30, im Ausführungsbeispiel auf der Decke 21, befestigt, insbesondere mittels Schrauben. Das Flachdach 30 umfasst eine Dachdämmungsschicht 34. Die Dachdämmungsschicht 34 dient zur thermischen Isolierung oder Dämmung des Flachdachs 30, bzw. des Gebäudes. Die Dachdämmungsschicht 34 kann beispielsweise Mineralwolle umfassen oder aus Mineralwolle bestehen. Es kann aber auch vorgesehen sein, dass die Dämmungsschicht einen Schaumstoff wie EPS (Expandiertes Polystyrol), XPS (Extrudiertes Polystyrol) oder Schaumglas umfasst oder hieraus besteht. Die Dachdämmungsschicht 34 ist auf der Dampfsperre 32 angeordnet. Oberhalb der Dachdämmungsschicht 34 ist eine Dachabdichtung 33 angeordnet. Die Dachabdichtung 33 dichtet die Dachdämmungsschicht 34 vollflächig ab. Oberhalb der Dachabdichtung 33 ist eine Kiesschicht 35 des Flachdachs 30 angeordnet. Statt der Kiesschicht 35 oder zusätzlich hierzu kann eine Substratschicht vorgesehen sein. Die Substratschicht kann beispielsweise eine Dachbegrünung ermöglichen.

Die Flachdachaufbauten-Stütze 1 ist zumindest teilweise im Aufbau des Flachdachs 30 angeordnet. Die Flachdachaufbauten-Stütze 1 durchdringt die Dachdämmungsschicht 34 vollständig. Die Flachdachaufbauten-Stütze 1 durchdringt die Dachabdichtung 33 vollständig. Die Flachdachaufbauten-Stütze 1 durchdringt die Kiesschicht 35 oder die Substratschicht vollständig. Die Flachdachaufbauten-Stütze 1 ist oberhalb der Dampfsperre 32 angeordnet. Die Flachdachaufbauten-Stütze 1 ragt aus dem Flachdach 30 heraus. Im Ausführungsbeispiel steht die Flachdachaufbauten-Stütze 1 mindestens 50 cm über die Kiesschicht 35 hervor.

In Fig. 1 ist auf der Flachdachaufbauten-Stütze 1 das Objekt 40 angeordnet. Bei dem Objekt 40 kann es sich um eine technische Gebäudeausrüstung handeln. Mit diesem Begriff werden alle im Bauwerk eingebauten oder fest damit verbundenen technischen Einrichtungen, die der funktionsgerechten Nutzung von Gebäuden dienen, bezeichnet. Im Zusammenhang mit der Erfindung handelt es sich hierbei ausschließlich um eine technische Gebäudeausrüstung, die auf einem Flachdach, insbesondere außerhalb des Gebäudes, angeordnet werden kann. Hierzu zählen u. a. raumlufttechnische Anlagen, kältetechnische Anlagen, Systeme zur Nutzung erneuerbarer Energien (Solarthermie, Geothermie, Photovoltaik), Wasser- und Abwasserversorgungsanlagen (sanitäre Installationen), Stromversorgungsanlagen und/oder Feuerlöschanlagen. Bei dem Objekt 40 kann es sich aber auch um eine Dachterrasse oder beliebige andere Dachaufbauten handeln.

Die Flachdachaufbauten-Stütze 1 ist zur Stützung der genannten Objekte 40 ausgelegt. Zur Stützung des Objekts 40 können mehrere Flachdachaufbauten-Stützen 1 vorgesehen sein. Eine einzelne Flachdachaufbauten-Stütze 1 ist statisch insbesondere so ausgelegt, dass sie mindestens 500 kg, bevorzugt mindestens 1000 kg Gewicht tragen kann.

Die Flachdachaufbauten-Stütze 1 besitzt einen Fuß 2. Der Fuß 2 dient zur Abstützung der Flachdachaufbauten-Stütze 1 auf dem Flachdach 30. Die Flachdachaufbauten-Stütze 1 besitzt einen Kopf 3. Der Kopf 3 der Flachdachaufbauten-Stütze 1 dient zur Abstützung des Objekts 40. Die Flachdachaufbauten-Stütze 1 umfasst ein unteres Rohrelement 4. Flachdachaufbauten-Stütze 1 umfasst ein oberes Rohrelement 5. Das untere Rohrelement 4 ist getrennt vom oberen Rohrelement 5 ausgebildet. Die Flachdachaufbauten-Stütze 1 ist zumindest zweiteilig ausgebildet. Das untere Rohrelement 4 ist zur Befestigung auf dem Flachdach 30, insbesondere direkt mittels Schrauben, vorgesehen.

Der Fuß 2 der Flachdachaufbauten-Stütze 1 ist an dem unteren Rohrelement 4 angeordnet. Im Ausführungsbeispiel ist der Fuß 2 durch das untere Rohrelement 4 ausgebildet. Das untere Rohrelement 4 umfasst einen Grundkörper 17. Der Fuß 2 umfasst eine Platte. Im Ausführungsbeispiel ist die Platte aus Metall, insbesondere aus Stahl. Der Grundkörper 17 ist durch ein Rohr gebildet. Das Rohr besitzt im Wesentlichen die Form eines Hohlzylinders. Der Grundkörper 17 ist im Ausführungsbeispiel aus Metall, insbesondere aus Stahl. Der Grundkörper 17 ist insbesondere aus demselben Material wie die Platte des Fußes 2. Das untere Ende des Grundkörpers 17 des unteren Rohrelements 4 ist fest mit dem Fuß 2 verbunden. Im Ausführungsbeispiel ist die den Fuß 2 bildende Platte an das den Grundkörper 17 bildende Rohr angeschweißt. Die Platte deckt das untere Ende des Grundkörpers 17 insbesondere vollständig ab.

Im Ausführungsbeispiel umfasst der Fuß 2 ein thermisch dämmendes Element 18. Das thermisch dämmende Element 18 ist zwischen der Platte des Fußes 2 und dem Grundkörper 17 des unteren Rohrelements angeordnet. Das thermisch dämmende Element 18 ist aus einem thermisch dämmenden Material, beispielsweise aus einem geschäumten Kunststoff. Insbesondere kann das Material des thermisch dämmenden Elements 18 expandiertes oder extrudiertes Polystyrol sein. Das thermisch dämmende Element 18 ist im Ausführungsbeispiel unmittelbar auf der Dampfsperre 32 angeordnet. Das thermisch dämmende Element 18 liegt unmittelbar an der Platte des Fußes 2 an.

Das untere Rohrelement 4 besitzt ein oberes Rohrelementende 6. Das obere Rohrelement 6 des unteren Rohrelements 4 ist dem Fuß 2 abgewandt. Das obere Rohrelementende 6 ist an dem dem Fuß 2 abgewandten Längsende des Grundkörpers 17 angeordnet. Das untere Rohrelement 4 ist an seinem oberen Rohrelementende 6 offen. Im Inneren des unteren Rohrelements 4 ist ein Innenraum 19 ausgebildet. Der Innenraum 19 des unteren Rohrelements 4 ist durch eine Innenseite des Grundkörpers 17 und den Fuß 2, insbesondere durch die Platte des Fußes 2 begrenzt. Der Innenraum 19 ist zum oberen Rohrelementende 6 des unteren Rohrelements 4 hin offen.

Die Flachdachaufbauten-Stütze 1 besitzt eine Längsrichtung 50. Im Ausführungsbeispiel steht die Längsrichtung 50 senkrecht auf die Decke 21. Die Flachdachaufbauten-Stütze 1 ist mittels Schrauben unmittelbar mit der Decke 21 verbunden. Die Schrauben sind in die Decke 21, insbesondere durch die Dampfsperre 32 hindurch, geschraubt. Die Längsrichtung der Flachdachaufbauten-Stütze 1 erstreckt sich vom Fuß 2 der Flachdachaufbauten-Stütze 1 in Richtung des Kopfes 3 der Flachdachaufbauten-Stütze 1. Der Innenraum 19 erstreckt sich in Längsrichtung 50 der Flachdachaufbauten-Stütze 1 über den gesamten Bereich von dem Fuß 2 bis hin zu dem oberen Rohrelementende 6 des unteren Rohrelements 4. Der Fuß 2 steht in Richtung quer, insbesondere in Richtung senkrecht zur Längsrichtung 50 der Flachdachaufbauten-Stütze 1 über den Grundkörper 17 des unteren Rohrelements 4 hervor.

Der Kopf 3 der Flachdachaufbauten-Stütze 1 ist an einem oberen Rohrelement 5 angeordnet. Der Kopf 3 der Flachdachaufbauten-Stütze 1 ist durch das obere Rohrelement 5 ausgebildet. Im Ausführungsbeispiel ist der Kopf 3 durch eine Platte ausgebildet. Die Platte ist im Ausführungsbeispiel aus Metall, insbesondere aus Stahl.

Das obere Rohrelement 5 umfasst einen Basiskörper 22. Der Basiskörper 22 ist im Ausführungsbeispiel aus Metall, insbesondere aus Stahl. Der Basiskörper 22 ist insbesondere aus demselben Material wie der Kopf 3. Der Basiskörper 22 ist rohrförmig. Der Basiskörper 22 weist im Wesentlichen die Form eines Hohlzylinders auf. Der Kopf 3 ist an einem Ende des Basiskörpers 22 angeordnet. Der Kopf 3 begrenzt den Basiskörper 22 des oberen Rohrelements 5 in Längsrichtung 50. Der Kopf 3 ist an einem oberen, dem Fuß 2 abgewandten Längsende des Basiskörpers 22 angeordnet. Der Kopf 3 ist im Ausführungsbeispiel an den Basiskörper 22 angeschweißt. Der Kopf 3 steht in Richtung quer, insbesondere senkrecht zur Längsrichtung 50 über den Basiskörper 22 hervor. Der Kopf 3 deckt ein oberes Ende des Basiskörpers 22, insbesondere vollständig, ab.

Das obere Rohrelement 5 besitzt ein unteres Rohrelementende 7. Das untere Rohrelementende 7 des oberen Rohrelements 5 ist dem Kopf 3 abgewandt. Das untere Rohrelement 4 ist an seinem oberen Rohrelementende 6 offen.

Das obere Rohrelement 5 besitzt einen Innenraum 23. Der Kopf 3 und eine innere Umfangsseite des Basiskörpers 22 begrenzen den Innenraum 23. Der Innenraum 23 ist am unteren Rohrelementende 7 offen. Der Innenraum 23 des oberen Rohrelements 5 erstreckt sich von dem unteren Rohrelementende 7 bis hin zum Kopf 3 des oberen Rohrelements 5.

Das obere Rohrelementende 6 des Grundkörpers 17 des unteren Rohrelements 4 besitzt einen unteren Öffnungsdurchmesser. Das untere Rohrelementende 7 des Basiskörpers 22 des oberen Rohrelements 5 besitzt einen oberen Öffnungsdurchmesser. Im Ausführungsbeispiel ist der obere Öffnungsdurchmesser größer als der untere Öffnungsdurchmesser. Das untere Rohrelement 4 kann mit seinem Grundkörper 17 zumindest teilweise in dem Basiskörper 22 des oberen Rohrelements 5 aufgenommen werden.

Die Flachdachaufbauten-Stütze 1 umfasst eine Verbindungsvorrichtung 8. Die Verbindungsvorrichtung 8 dient zur Verbindung des unteren Rohrelements 4 mit dem oberen Rohrelement 5. Durch die Verbindungsvorrichtung 8 kann das obere Rohrelement 5 so mit dem unteren Rohrelement 4 verbunden werden, dass die dadurch gebildete Flachdachaufbauten-Stütze 1 die Gewichtskraft des auf der Flachdachaufbauten-Stütze 1 angeordneten Objekts 40 abfangen kann. Die Verbindungsvorrichtung 8 ist insbesondere so ausgelegt, dass die Flachdachaufbauten-Stütze 1 mindestens das Gewicht von 500 kg, bevorzugt mindestens das Gewicht von 1000 kg abfangen kann. Das untere Rohrelement 4 ist mittels der Verbindungsvorrichtung 8 derart mit dem oberen Rohrelement 5 verbindbar, dass das untere Rohrelement 4 und das obere Rohrelement 5 einen gemeinsamen Hohlraum 9 begrenzen. Der gemeinsame Hohlraum 9 erstreckt sich im zusammengebauten Zustand der Flachdachaufbauten-Stütze 1 in Längsrichtung 50 von dem Fuß 2 bis hin zu dem Kopf 3. Das obere Rohrelement 5 und das untere Rohrelement 4 sind mittels der Verbindungsvorrichtung 8 frei von einer stoffschlüssigen Verbindung miteinander verbindbar. Das untere Rohrelement 4 und das obere Rohrelement 5 sind mittels der Verbindungsvorrichtung 8 vor Ort auf der Baustelle miteinander verbindbar.

Im Ausführungsbeispiel umfasst die Verbindungsvorrichtung 8 eine Schraubverbindung. Es kann auch vorgesehen sein, dass die Verbindungsvorrichtung 8 ausschließlich durch eine Schraubverbindung gebildet ist. Im Ausführungsbeispiel ist ein erster Teil 10 der Schraubverbindung an dem unteren Rohrelement 4 ausgebildet. Ein zweiter Teil 20 der Schraubverbindung ist an dem oberen Rohrelement 5 ausgebildet. Eines der beiden Rohrelemente 4, 5 umfasst ein Außengewinde und das andere der beiden Rohrelemente 4, 5 ein Innengewinde. Das Innengewinde des einen Rohrelements 4, 5 und das Außengewinde des anderen Rohrelements 4, 5 greifen im zusammengebauten Zustand der Flachdachaufbauten-Stütze 1 ineinander. Im Ausführungsbeispiel ist das Außengewinde der Schraubverbindung an dem unteren Rohrelement 4, insbesondere im oberen Bereich des unteren Rohrelements 4, angeordnet. Im Ausführungsbeispiel ist das Innengewinde der Schraubverbindung, insbesondere im unteren Bereich des oberen Rohrelements 5, am oberen Rohrelement 5 angeordnet.

Es kann aber auch vorgesehen sein, dass die Verbindungsvorrichtung 8 keine Schraubverbindung, sondern eine andere Art von Verbindung umfasst. Beispielsweise kann vorgesehen sein, dass die Verbindungsvorrichtung als Steckverbindung ausgebildet ist. Hierbei kann zumindest an einem der beiden Rohrelemente 4, 5 eine Nut oder ein Falz vorgesehen sein, an der/dem das andere Rohrelement im zusammengebauten Zustand der Flachdachaufbauten-Stütze 1 anliegt. Es kann dann zur Sicherung gegen eine Relativbewegung zwischen unterem Rohrelement 4 und oberem Rohrelement 5 ein Sicherungsbolzen oder ähnliches vorgesehen sein.

Im Ausführungsbeispiel umfasst die Flachdachaufbauten-Stütze 1 ein Sperrelement 11. Das Sperrelement 11 dient zur Sperrung einer Relativbewegung zwischen dem oberen Rohrelement 5 und dem unteren Rohrelement 4. Das Sperrelement 11 verhindert eine Relativbewegung zwischen dem oberen Rohrelement 5 und dem unteren Rohrelement 4. Im Ausführungsbeispiel sichert das Sperrelement 11 die beiden Rohrelemente 4, 5 gegen eine Relativbewegung mittels Reibkraft. Hierzu drückt das Sperrelement 11 auf das innen liegende Rohrelement 4, 5, im Ausführungsbeispiel auf das untere Rohrelement 4. Im Ausführungsbeispiel ist das Sperrelement 11 durch eine Seitenwand des oberen Rohrelements 5, insbesondere durch eine Seitenwand des Basiskörpers 22 des oberen Rohrelements 5, hindurchgeschraubt und drückt auf die Außenseite der Seitenwand des unteren Rohrelements 4, insbesondere auf die Außenseite der Seitenwand des Grundkörpers 17. Im Ausführungsbeispiel ist das Sperrelement 11 eine Schraube. Das Sperrelement 11 wirkt in Richtung quer, insbesondere senkrecht zur Längsrichtung 50.

Das Sperrelement 11 ist in Richtung senkrecht zur Längsrichtung 50 durch die Seitenwand des Basiskörpers 22 des oberen Rohrelements 5 geschraubt. Das Sperrelement 11 ist im Ausführungsbeispiel Bestandteil der Verbindungsvorrichtung 8.

Die Flachdachaufbauten-Stütze 1 besitzt eine in Längsrichtung 50 gemessene Stützhöhe h. Die Stützhöhe h ist durch eine Relativbewegung zwischen dem unteren Rohrelement 4 und dem oberen Rohrelement 5 einstellbar. Hierbei wird das obere Rohrelement 5 in Längsrichtung 50 oder entgegen der Längsrichtung 50 von dem unteren Rohrelement 4 weg bzw. auf das untere Rohrelement 4 zu bewegt. Anschließend ist eine Sicherung des oberen Rohrelements 5 an dem unteren Rohrelement 4 mittels des Sperrelements 11 vorgesehen. Im Ausführungsbeispiel wird zur Einstellung der Stützhöhe h die Verbindungsvorrichtung 8, insbesondere die Schraubverbindung genutzt. Im Ausführungsbeispiel wird zur Einstellung der Stützhöhe h die Schraubverbindung ein Stück weit gelöst oder geschlossen. Unter "Lösen der Schraubverbindung" ist hierbei lediglich eine Drehung des oberen Rohrelements 5 gegenüber dem unteren Rohrelement 4 in Löserichtung gemeint. Zur Einstellung der Stützhöhe h wird das obere Rohrelement 5 gegenüber dem unteren Rohrelement 4 in oder gegen die Löserichtung gedreht. Anschließend wird das obere Rohrelement 5 mittels des Sperrelements 11 an dem unteren Rohrelement 4 gegen eine Drehbewegung gegenüber dem unteren Rohrelement 4 gesichert. Dann ist die Stützhöhe h der Flachdachaufbauten-Stütze 1 eingestellt und fixiert. Dann ist die Flachdachaufbauten-Stütze 1 bei der gewünschten Stützhöhe h fixiert.

Die Flachdachaufbauten-Stütze 1 umfasst ein inneres Dämmelement 12. Das innere Dämmelement 12 dient zur thermischen Isolierung der Flachdachaufbauten-Stütze 1.

Das innere Dämmelement 12 ist sowohl in dem oberen Rohrelement 5 als auch in dem unteren Rohrelement 4 angeordnet. Das innere Dämmelement 12 füllt den gemeinsamen Hohlraum 9 des unteren Rohrelements 4 und des oberen Rohrelements 5 vollständig aus. Das innere Dämmelement 12 erstreckt sich im zusammengebauten Zustand der Flachdachaufbauten-Stütze 1 in Längsrichtung 50 von dem Fuß 2 bis hin zu dem Kopf 3. Das innere Dämmelement 12 besteht aus einem thermisch isolierenden Material. Das thermisch isolierende Material wird auch als thermisch dämmendes Material bezeichnet. Hierbei kann es sich beispielsweise um Mineralwolle, einen Schaumstoff oder ähnliches handeln. Das innere Dämmelement 12 besteht aus weichem Material. Das weiche Material kann sich an eine Verkleinerung oder Vergrößerung der Stützhöhe h der Dachaufbauten-Stütze 1 anpassen. Insbesondere kann das weiche Material zusammengedrückt werden. Insbesondere ist das weiche Material elastisch.

Sowohl das obere Rohrelement 5 als auch das untere Rohrelement 4 sind vollflächig verzinkt. Das untere Rohrelement 4 besitzt eine Innenseite 14. Das obere Rohrelement 5 besitzt eine Innenseite 15. Sowohl die Innenseite 14 des unteren Rohrelements 4 als auch die Innenseite 15 des oberen Rohrelements 5 sind vollflächig verzinkt.

Die Flachdachaufbauten-Stütze 1 umfasst ein Dichtelement 13. Das Dichtelement 13 dient zur Abdichtung eines Übergangs 31 zwischen der Flachdachaufbauten-Stütze 1 und dem Flachdach 30. Das Dichtelement 13 dient insbesondere zur Abdichtung des Übergangs 31 gegenüber Flüssigkeit. Das Dichtelement 13 ist schlauchförmig. Das Dichtelement 13 ist insbesondere ein Schrumpfschlauch. Das Dichtelement 13 ist über das untere Rohrelement 4 oder das obere Rohrelement 5 gestülpt. Im Ausführungsbeispiel ist das Dichtelement 13 über das obere Rohrelement 5 gestülpt. Das obere Rohrelement 5 durchdringt das Dichtelement 13 vollständig. Das Dichtelement 13 läuft geschlossen um das obere Rohrelement 5 um.

Es kann aber auch vorgesehen sein, dass das Dichtelement 13 über das untere Rohrelement 4 gestülpt ist. Insbesondere ist das Dichtelement 13 über den Basiskörper 22 des oberen Rohrelements 5 gestülpt. Das obere Rohrelement 5 ist mit seinem Basiskörper 22 durch das Dichtelement 13 gesteckt. Das Dichtelement 13 liegt an einer Außenwand des Basiskörpers 22 des oberen Rohrelements 5 an. Das Dichtelement 13 liegt an der Dachabdichtung 33 des Flachdachs 30 an. Das Dichtelement 13 ist dichtend mit der Flachdachaufbauten-Stütze 1 und dem Flachdach 30 verbunden. Das Dichtelement 13 liegt sowohl an der Flachdachaufbauten-Stütze 1 als auch an dem Flachdach 30, insbesondere an der Dachabdichtung 33 des Flachdachs 30 vollflächig an. Das Dichtelement 13 besteht aus einem flüssigkeitsdichten Material. Das Dichtelement 13 besteht aus einem thermoplastischen Material. Beispielsweise ist das Dichtelement 13 aus Polyolefin, Polyvinylchlorid, oder einem ähnlichen Material. Es kann auch vorgesehen sein, dass das Dichtelement 13 als Materialbestandteil Bitumen umfasst oder vollständig aus Bitumen ist.

Die Flachdachaufbauten-Stütze 1 umfasst eine äußere Dämmmanschette 16. Die äußere Dämmmanschette 16 dient zur thermischen Isolierung der Flachdachaufbauten-Stütze 1. Die äußere Dämmmanschette 16 dient zur thermischen Dämmung der Flachdachaufbauten-Stütze 1. Die äußere Dämmmanschette 16 umschließt das obere Rohrelement 5. Die äußere Dämmmanschette 16 umschließt die Flachdachaufbauten-Stütze 1 in Umfangsrichtung um die Längsrichtung 50 vollständig. Die äußere Dämmmanschette 16 erstreckt sich in Längsrichtung 50 von dem Flachdach 30 insbesondere von der Abdichtung 33 des Flachdachs 30 bis zu dem Kopf 3 der Flachdachaufbauten-Stütze 1. Die äußere Dämmmanschette 16 ist aus einem thermischen isolierenden Material. Das thermisch isolierende Material wird auch als thermisch dämmendes Material bezeichnet. Das thermisch isolierende Material ist frost- und witterungsbeständig. Die äußere Dämmmanschette 16 ist beispielsweise aus extrudiertem Polystyrol oder ähnlichem. Im Ausführungsbeispiel umschließt die äußere Dämmmanschette 16 lediglich das obere Rohrelement 5. Es kann aber auch vorgesehen sein, dass die äußere Dämmmanschette 16 auch das untere Rohrelement 4 zumindest teilweise umschließt. Die äußere Dämmmanschette 16 ist radial außerhalb des Dichtelements 13 angeordnet. Das Dichtelement 13 ist zwischen der äußeren Dämmmanschette 16 und dem oberen Rohrelement 5, insbesondere dem Basiskörper 22 des oberen Rohrelements 5 angeordnet. Die äußere Dämmmanschette 16 liegt an ihrem unteren Längsende auf dem Dichtelement 13 auf.

Beim Verfahren zur Herstellung der Flachdachaufbauten-Stütze 1 zur dauerhaften Abstützung des fest oberhalb des Flachdachs 30 zu montierenden Objekts 40 auf dem Flachdach 30 wird bei der Montage der Flachdachaufbauten-Stütze 1 auf dem Flachdach 30 zunächst das untere Rohrelement 4 mit seinem Fuß 2 auf dem Flachdach 30 befestigt. Hierbei wird der Fuß 2 auf einer Dampfsperre 32 des Flachdachs 30 befestigt. Im Ausführungsbeispiel werden hierzu durch die Dampfsperre 32 in die Decke 21 Schrauben durch den Fuß 2 des unteren Rohrelements 4 der Flachdachaufbauten-Stütze 1 geschraubt. Auf diese Weise wird der Fuß 2 des unteren Rohrelements 4 und damit das untere Rohrelement 4 an dem Flachdach 30 befestigt. Es kann vorgesehen sein, dass zwischen dem Flachdach 30, insbesondere zwischen der Decke 21, und dem Fuß 2 des unteren Rohrelements 4 das thermisch isolierende Element 18 angeordnet wird, bevor das untere Rohrelement 4 mit seinem Fuß 2 auf dem Flachdach 30 befestigt wird.

In einem nachfolgenden Verfahrensschritt wird das obere Rohrelement 5 mit seinem unteren Rohrelementende 7 mit dem oberen Rohrelementende 6 des unteren Rohrelements 4 verbunden. Im Ausführungsbeispiel geschieht dies mittels der Verbindungsvorrichtung 8. Hierbei wird das obere Rohrelement 5 mit seinem Innengewinde auf das Außengewinde des unteren Rohrelements 4 aufgeschraubt.

Vor dem Verbinden des unteren Rohrelements 4 mit dem oberen Rohrelement 5, insbesondere nach der Befestigung des unteren Rohrelements 4 mit seinem Fuß 2 auf dem Flachdach 30, wird in das untere Rohrelement 4 das innere Dämmelement 12 zur thermischen Isolierung oder Dämmung der Flachdachaufbauten-Stütze 1 eingebracht. Das innere Dämmelement 12 wird so in das untere Rohrelement 4 eingebracht, dass das innere Dämmelement 12 auf dem unteren Rohrelement 4 herausragt. Hierbei stützt sich das innere Dämmelement 12 an der Innenseite 14 im Bereich des Fußes 2 des unteren Rohrelements 4 ab. Beim Verbinden des oberen Rohrelements 5 mit dem unteren Rohrelement 4 wird das obere Rohrelement 5 über das innere Dämmelement 12 gestülpt.

Vor dem Verbinden des oberen Rohrelements 5 mit dem unteren Rohrelement 4, insbesondere nach der Befestigung des unteren Rohrelements 4 mit seinem Fuß 2 auf dem Flachdach 30, wird über das untere Rohrelement 4 oder über das obere Rohrelement 5 das Dichtelement 13 zur Abdichtung des Übergangs 31 zwischen der Flachdachaufbauten-Stütze 1 und dem Flachdach 30 gestülpt. Im Ausführungsbeispiel wird das Dichtelement 13 über das obere Rohrelement 5 gestülpt. Anschließend wird das obere Rohrelement 5 mit dem unteren Rohrelement 4 verbunden und dann das Dichtelement 13 so auf dem unteren Rohrelement 4 oder dem oberen Rohrelement 5, im Ausführungsbeispiel auf dem oberen Rohrelement 5, verschoben, dass das Dichtelement 13 an dem Flachdach 30, insbesondere an der Dachabdichtung 33 des Flachdachs 30 anliegt. Anschließend wird das Dichtelement 13 erhitzt, so dass es danach dichtend an dem Übergang 31 anliegt.

Nach dem Verbinden des oberen Rohrelements 5 mit dem unteren Rohrelement 4 und bevor das Dichtelement 13 am Übergang 31 positioniert und/oder erhitzt wird, wird die Stützhöhe h der Flachdachaufbauten-Stütze 1 durch Bewegung des oberen Rohrelements 5 relativ zu dem unteren Rohrelement 4 eingestellt. Anschließend wird das obere Rohrelement 5 gegen eine Bewegung relativ zu dem unteren Rohrelement 4 mittels des Sperrelements 11 gesichert. Sowohl das obere Rohrelement 5 als auch das untere Rohrelement 4 werden zeitlich vor dem Verbinden des oberen Rohrelements 5 mit dem unteren Rohrelement 4, insbesondere vor der Montage der Flachdachaufbauten-Stütze 1 vollflächig verzinkt. Sowohl die Innenseite 14 des unteren Rohrelements 4 als auch die Innenseite 15 des oberen Rohrelement 5 werden zeitlich vor dem Verbinden des oberen Rohrelements 5 mit dem unteren Rohrelement 4, insbesondere vor der Montage der Flachdachaufbauten-Stütze 1 vollflächig verzinkt.

## Patentansprüche

1. Flachdachaufbauten-Stütze zur dauerhaften Abstützung eines fest oberhalb eines Flachdachs (30) zu montierenden Objekts (40), wie beispielsweise einer technischen Gebäudeausrüstung oder einer Dachterrasse, auf dem Flachdach (30), wobei die Flachdachaufbauten-Stütze (1) einen Fuß (2) zur Abstützung auf dem Flachdach (30) besitzt, wobei die Flachdachaufbauten-Stütze (1) einen Kopf (3) zur Abstützung des Objekts (40) besitzt, wobei die Flachdachaufbauten-Stütze (1) ein unteres Rohrelement (4) und ein getrennt vom unteren Rohrelement (4) ausgebildetes oberes Rohrelement (5) umfasst, wobei der Fuß (2) der Flachdachaufbauten-Stütze (1) an dem unteren Rohrelement (4) angeordnet ist, wobei der Kopf (3) der Flachdachaufbauten-Stütze (1) an dem oberen Rohrelement (5) angeordnet ist, wobei das untere Rohrelement (4) ein oberes Rohrelementende (6) besitzt, das dem Fuß (2) abgewandt ist, wobei das obere Rohrelement (5) ein unteres Rohrelementende (7) besitzt, das dem Kopf (3) abgewandt ist, wobei das untere Rohrelement (4) an seinem oberen Rohrelementende (6) offen ist, wobei das obere Rohrelement (5) an seinem unteren Rohrelementende (7) offen ist, wobei die Flachdachaufbauten-Stütze (1) eine Verbindungsvorrichtung (8) zur Verbindung des unteren Rohrelements (4) mit dem oberen Rohrelement (5) umfasst, wobei das untere Rohrelement (4) mittels der Verbindungsvorrichtung (8) derart mit dem oberen Rohrelement (5) verbindbar ist, dass das untere Rohrelement (4) und das obere Rohrelement (5) einen gemeinsamen Hohlraum (9) begrenzen,
wobei die Flachdachaufbauten-Stütze (1) ein inneres Dämmelement (12) zur thermischen Isolierung besitzt, und dass das innere unteren Rohrelement (4) angeordnet ist,
**dadurch gekennzeichnet, dass** das innere Dämmelement (12) derart aus dem unteren Rohrelement (4) herausragt, dass beim Verbinden des unteren Rohrelements (4) mit dem oberen Rohrelement (5) das obere Rohrelement (5) über das innere Dämmelement (12) gestülpt werden kann.

2. Flachdachaufbauten-Stütze nach Anspruch 1,
**dadurch gekennzeichnet, dass** der durch das untere Rohrelement (4) und das obere Rohrelement (5) begrenzte gemeinsame Hohlraum (9) mittels des als Dämmstoffkern ausgebildeten inneren Dämmelements (12) ausgefüllt ist.

3. Flachdachaufbauten-Stütze nach Anspruch 1 oder 2,
**dadurch gekennzeichnet, dass** das obere Rohrelement (5) und das untere Rohrelement (4) mittels der Verbindungsvorrichtung (8) frei von einer stoffschlüssigen Verbindung miteinander verbindbar sind.

4. Flachdachaufbauten-Stütze nach einem der Ansprüche 1 bis 3,
**dadurch gekennzeichnet, dass** das die Verbindungsvorrichtung (8) eine Schraubverbindung umfasst, dass ein erster Teil (10) der Schraubverbindung an dem unteren Rohrelement (4) ausgebildet ist, und dass ein zweiter Teil (20) der Schraubverbindung an dem oberen Rohrelement (5) ausgebildet ist.

5. Flachdachaufbauten-Stütze nach einem der Ansprüche 1 bis 4,
**dadurch gekennzeichnet, dass** die Flachdachaufbauten-Stütze (1) eine in ihre Längsrichtung (50) gemessene Stützhöhe (h) besitzt, dass die Stützhöhe (h) durch Relativbewegung des unteren Rohrelements (4) und des oberen Rohrelements (5) einstellbar ist.

6. Flachdachaufbauten-Stütze nach einem der Ansprüche 1 bis 5,
**dadurch gekennzeichnet, dass** die Flachdachaufbauten-Stütze (1) ein Sperrelement (11) zur Sperrung einer Relativbewegung zwischen dem oberen Rohrelement (5) und dem unteren Rohrelement (4) besitzt.

7. Flachdachaufbauten-Stütze nach einem der Ansprüche 1 bis 6,
**dadurch gekennzeichnet, dass** sowohl das obere Rohrelement (5) als auch das untere Rohrelement (4) vollflächig verzinkt sind, insbesondere auf der jeweiligen Innenseite (14, 15).

8. Flachdachaufbauten-Stütze nach einem der Ansprüche 1 bis 7,
**dadurch gekennzeichnet, dass** die Flachdachaufbauten-Stütze (1) ein Dichtelement (13), insbesondere einen Schrumpfschlauch, zur Abdichtung des Übergangs (31) zwischen der Flachdachaufbauten-Stütze (1) und einem Flachdach (30), insbesondere gegenüber Flüssigkeit, umfasst.

9. Flachdachaufbauten-Stütze nach einem der Ansprüche 1 bis 8,
**dadurch gekennzeichnet, dass** die Flachdachaufbauten-Stütze (1) eine äußere Dämmmanschette (16) zur thermischen Isolierung umfasst, und dass die äußere Dämmmanschette (16) zumindest das obere Rohrelement (5) umschließt.

10. Verfahren zur Herstellung einer Flachdachaufbauten-Stütze (1) zur dauerhaften Abstützung eines fest oberhalb eines Flachdachs (30) zu montierenden Objekts (40), wie beispielsweise einer technischen Gebäudeausrüstung oder einer Dachterrasse, auf dem Flachdach (30), wobei die Flachdachaufbauten-Stütze (1) ein unteres Rohrelement (4) und ein getrennt vom unteren Rohrelement (4) ausgebildetes oberes Rohrelement (5) umfasst, wobei ein Fuß (2) der Flachdachaufbauten-Stütze (1) an dem unteren Rohrelement (4) angeordnet ist, wobei ein Kopf (3) der Flachdachaufbauten-Stütze (1) an dem oberen Rohrelement (5) angeordnet ist, wobei das untere Rohrelement (4) ein oberes Rohrelementende (6) besitzt, das dem Fuß (2) abgewandt ist, wobei das obere Rohrelement (5) ein unteres Rohrelementende (7) besitzt, das dem Kopf (3) abgewandt ist, wobei das untere Rohrelement (4) an seinem oberen Rohrelementende (6) offen ist, wobei das obere Rohrelement (5) an seinem unteren Rohrelementende (7) offen ist, wobei bei der Montage der Flachdachaufbauten-Stütze (1) auf dem Flachdach (30) zunächst das untere Rohrelement (4) mit seinem Fuß (2) auf dem Flachdach (30) befestigt wird, und wobei in einem nachfolgenden Verfahrensschritt das obere Rohrelement (5) mit seinem unteren Rohrelementende (7) mit dem oberen Rohrelementende (6) des unteren Rohrelements (4) verbunden wird,
wobei vor dem Verbinden des unteren Rohrelements (4) mit dem oberen Rohrelement (5) ein inneres Dämmelement (12) zur thermischen Isolierung der Flachdachaufbauten-Stütze (1) in das untere Rohrelement (4) eingebracht wird,
**dadurch gekennzeichnet, dass** das innere Dämmelement (12) aus dem unteren Rohrelement (4) herausragt und dann beim Verbinden des unteren Rohrelements (4) mit dem oberen Rohrelement (5) das obere Rohrelement (5) über das innere Dämmelement (12) gestülpt wird.

11. Verfahren nach Anspruch 10,
**dadurch gekennzeichnet, dass** das innere Dämmelement (12) nach der Befestigung des unteren Rohrelements (4) mit seinem Fuß (2) auf dem Flachdach (30) in das untere Rohrelement (4) eingebracht wird.

12. Verfahren nach Anspruch 10 oder 11,
**dadurch gekennzeichnet, dass** vor dem Verbinden des unteren Rohrelements (4) mit dem oberen Rohrelement (5), insbesondere nach der Befestigung des unteren Rohrelements (4) mit seinem Fuß (2) auf dem Flachdach (30), ein Dichtelement (13), insbesondere ein Schrumpfschlauch, zur Abdichtung des Übergangs (31) zwischen der Flachdachaufbauten-Stütze (1) und dem Flachdach (30) über das untere Rohrelement (4) oder das obere Rohrelement (5) gestülpt wird.

13. Verfahren nach einem der Ansprüche 1 bis 12,
**dadurch gekennzeichnet, dass** eine in Längsrichtung (50) der Flachdachaufbauten-Stütze (1) Stützhöhe (h) der Flachdachaufbauten-Stütze (1) durch Bewegung des oberen Rohrelements (5) relativ zu dem unteren Rohrelement (4) eingestellt wird, und insbesondere dass anschließend das obere Rohrelement (5) gegen eine Bewegung relativ zu dem unteren Rohrelement (4) mittels eines Sperrelements (11) gesichert wird.

14. Verfahren nach einem der Ansprüche 1 bis 13,
**dadurch gekennzeichnet, dass** sowohl das obere Rohrelement (5) als auch das untere Rohrelement (4) zeitlich vor dem Verbinden des unteren Rohrelements (4) mit dem oberen Rohrelement (5), insbesondere vor der Montage der Flachdachaufbauten-Stütze (1), vollflächig verzinkt werden, insbesondere dass die jeweiligen Innenseiten (14, 15) des unteren Rohrelements (4) und des oberen Rohrelements (5) vollflächig verzinkt werden.

## Claims

1. Flat-roof support for permanently supporting on a flat roof (30) an object (40) to be mounted fixedly above the flat roof (30), such as for example technical building equipment or a roof terrace, wherein the flat-roof support (1) has a foot (2) for support on the flat roof (30), wherein the flat-roof support (1) has a head (3) for supporting the object (40), wherein the flat-roof support (1) comprises a lower pipe element (4) and an upper pipe element (5), which is formed separately from the lower pipe element (4), wherein the foot (2) of the flat-roof support (1) is arranged on the lower pipe element (4), wherein the head (3) of the flat-roof support (1) is arranged on the upper pipe element (5), wherein the lower pipe element (4) has an upper pipe-element end (6) which is directed away from the foot (2), wherein the upper pipe element (5) has a lower pipe-element end (7) which is directed away from the head (3), wherein the lower pipe element (4) is open at its upper pipe-element end (6), wherein the upper pipe element (5) is open at its lower pipe-element end (7), wherein the flat-roof support (1) comprises a connecting device (8) for connecting the lower pipe element (4) to the upper pipe element (5), wherein the lower pipe element (4) is connectable by means of the connecting device (8) to the upper pipe element (5) in such a way that the lower pipe element (4) and the upper pipe element (5) delimit a common cavity (9),
wherein the flat-roof support (1) has an inner insulation element (12) for thermal insulation, and in that the inner insulation element (12) is arranged both in the upper pipe element (5) and in the lower pipe element (4), **characterized in that** the inner insulation element (12) protrudes from the lower pipe element (4) in such a way that, when the lower pipe element (4) is connected to the upper pipe element (5), the upper pipe element (5) can be fitted over the inner insulation element (12).

2. Flat-roof support according to Claim 1,
**characterized in that** the common cavity (9) delimited by the lower pipe element (4) and the upper pipe element (5) is filled by means of the inner insulation element (12), which is configured as an insulation core.

3. Flat-roof support according to Claim 1 or 2,
**characterized in that** the upper pipe element (5) and the lower pipe element (4) are connectable to one another without a materially bonded connection by means of the connecting device (8).

4. Flat-roof support according to one of Claims 1 to 3,
**characterized in that** the connecting device (8) comprises a screw connection, **in that** a first part (10) of the screw connection is formed on the lower pipe element (4), and **in that** a second part (20) of the screw connection is formed on the upper pipe element (5).

5. Flat-roof support according to one of Claims 1 to 4,
**characterized in that** the flat-roof support (1) has a support height (h) measured in its longitudinal direction (50), and **in that** the support height (h) is adjustable by way of relative movement of the lower pipe element (4) and the upper pipe element (5).

6. Flat-roof support according to one of Claims 1 to 5,
**characterized in that** the flat-roof support (1) has a blocking element (11) for blocking a relative movement between the upper pipe element (5) and the lower pipe element (4).

7. Flat-roof support according to one of Claims 1 to 6,
**characterized in that** both the upper pipe element (5) and the lower pipe element (4) are galvanized in a fully areal manner, in particular on the respective inner side (14, 15).

8. Flat-roof support according to one of Claims 1 to 7,
**characterized in that** the flat-roof support (1) comprises a sealing element (13), in particular a shrink-fit tube, for sealing off the transition (31) between the flat-roof support (1) and a flat roof (30), in particular with respect to liquid.

9. Flat-roof support according to one of Claims 1 to 8,
**characterized in that** the flat-roof support (1) comprises an outer insulation sleeve (16) for thermal insulation, and **in that** the outer insulation sleeve (16) surrounds at least the upper pipe element (5).

10. Method for producing a flat-roof support (1) for permanently supporting on a flat roof (30) an object (40) to be mounted fixedly above the flat roof (30), such as for example technical building equipment or a roof terrace, wherein the flat-roof support (1) comprises a lower pipe element (4) and an upper pipe element (5), which is formed separately from the lower pipe element (4), wherein a foot (2) of the flat-roof support (1) is arranged on the lower pipe element (4), wherein a head (3) of the flat-roof support (1) is arranged on the upper pipe element (5), wherein the lower pipe element (4) has an upper pipe-element end (6) which is directed away from the foot (2), wherein the upper pipe element (5) has a lower pipe-element end (7) which is directed away from the head (3), wherein the lower pipe element (4) is open at its upper pipe-element end (6), wherein the upper pipe element (5) is open at its lower pipe-element end (7), wherein, when the flat-roof support (1) is mounted on the flat roof (30), firstly the lower pipe element (4) is fastened at its foot (2) to the flat roof (30), and wherein, in a subsequent method step, the upper pipe element (5) is connected at its lower pipe-element end (7) to the upper pipe-element end (6) of the lower pipe element (4), wherein, before the connection of the lower pipe element (4) to the upper pipe element (5), an inner insulation element (12) for thermally insulating the flat-roof support (1) is introduced into the lower pipe element (4), **characterized in that** the inner insulation element (12) protrudes from the lower pipe element (4), and subsequently, when the lower pipe element (4) is connected to the upper pipe element (5), the upper pipe element (5) is fitted over the inner insulation element (12).

11. Method according to Claim 10,
**characterized in that** the inner insulation element (12) is introduced into the lower pipe element (4) after the lower pipe element (4) has been fastened at its foot (2) to the flat roof (30).

12. Method according to Claim 10 or 11,
**characterized in that**, before the connection of the lower pipe element (4) to the upper pipe element (5), in particular after the fastening of the lower pipe element (4) at its foot (2) to the flat roof (30), a sealing element (13), in particular a shrink-fit tube, for sealing off the transition (31) between the flat-roof support (1) and the flat roof (30) is fitted over the lower pipe element (4) or the upper pipe element (5).

13. Method according to one of Claims 1 to 12,
**characterized in that** a support height (h), in the longitudinal direction (50) of the flat-roof support (1), of the flat-roof support (1) is adjusted by way of movement of the upper pipe element (5) relative to the lower pipe element (4), and in particular **in that**, subsequently, the upper pipe element (5) is secured against movement relative to the lower pipe element (4) by means of a blocking element (11).

14. Method according to one of Claims 1 to 13,
**characterized in that** both the upper pipe element (5) and the lower pipe element (4) are galvanized in a fully areal manner temporally before the connection of the lower pipe element (4) to the upper pipe element (5), in particular before the mounting of the flat-roof support (1), in particular **in that** the respective inner sides (14, 15) of the lower pipe element (4) and the upper pipe element (5) are galvanized in a fully areal manner.

## Revendications

1. Support de structure de toit plat pour le soutien permanent d'un objet (40) à monter de manière fixe au-dessus d'un toit plat (30), comme par exemple un équipement de bâtiment technique ou une terrasse de toit, sur le toit plat (30), le support de structure de toit plat (1) possédant un pied (2) pour le soutien sur le toit plat (30), le support de structure de toit plat (1) possédant une tête (3) pour le soutien de l'objet (40), le support de structure de toit plat (1) comprenant un élément tubulaire inférieur (4) et un élément tubulaire supérieur (5) réalisé séparément de l'élément tubulaire inférieur (4), le pied (2) du support de structure de toit plat (1) étant agencé sur l'élément tubulaire inférieur (4), la tête (3) du support de structure de toit plat (1) étant agencée sur l'élément tubulaire supérieur (5), l'élément tubulaire inférieur (4) possédant une extrémité d'élément tubulaire supérieure (6) qui est détournée du pied (2), l'élément tubulaire supérieur (5) possédant une extrémité d'élément tubulaire inférieure (7) qui est détournée de la tête (3), l'élément tubulaire inférieur (4) étant ouvert à son extrémité d'élément tubulaire supérieure (6), l'élément tubulaire supérieur (5) étant ouvert à son extrémité d'élément tubulaire inférieure (7), le support de structure de toit plat (1) comprenant un dispositif de liaison (8) pour relier l'élément tubulaire inférieur (4) à l'élément tubulaire supérieur (5), l'élément tubulaire inférieur (4) pouvant être relié à l'élément tubulaire supérieur (5) au moyen du dispositif de liaison (8) de telle sorte que l'élément tubulaire inférieur (4) et l'élément tubulaire supérieur (5) délimitent une cavité commune (9),
le support de structure de toit plat (1) possédant un élément d'isolation intérieur (12) pour l'isolation thermique, et en ce que l'élément d'isolation intérieur (12) est agencé aussi bien dans l'élément tubulaire supérieur (5) que dans l'élément tubulaire inférieur (4), **caractérisé en ce que** l'élément d'isolation intérieur (12) fait saillie de l'élément tubulaire inférieur (4) de telle sorte que, lors de la liaison de l'élément tubulaire inférieur (4) à l'élément tubulaire supérieur (5), l'élément tubulaire supérieur (5) peut être retourné sur l'élément d'isolation intérieur (12).

2. Support de structure de toit plat selon la revendication 1,
**caractérisé en ce que** la cavité commune (9) délimitée par l'élément tubulaire inférieur (4) et l'élément tubulaire supérieur (5) est remplie au moyen de l'élément d'isolation intérieur (12) réalisé comme un noyau de matériau isolant.

3. Support de structure de toit plat selon la revendication 1 ou 2,
**caractérisé en ce que** l'élément tubulaire supérieur (5) et l'élément tubulaire inférieur (4) peuvent être reliés l'un à l'autre au moyen du dispositif de liaison (8) sans être reliés par une liaison par matière.

4. Support de structure de toit plat selon l'une quelconque des revendications 1 à 3, **caractérisé en ce que** le dispositif de liaison (8) comprend une liaison à vis, **en ce qu'**une première partie (10) de la liaison à vis est réalisée sur l'élément tubulaire inférieur (4), et **en ce qu'**une deuxième partie (20) de la liaison à vis est réalisée sur l'élément tubulaire supérieur (5).

5. Support de structure de toit plat selon l'une quelconque des revendications 1 à 4, **caractérisé en ce que** le support de structure de toit plat (1) possède une hauteur de support (h) mesurée dans sa direction longitudinale (50), **en ce que** la hauteur de support (h) est réglable par un mouvement relatif de l'élément tubulaire inférieur (4) et de l'élément tubulaire supérieur (5).

6. Support de structure de toit plat selon l'une quelconque des revendications 1 à 5, **caractérisé en ce que** le support de structure de toit plat (1) possède un élément de blocage (11) pour bloquer un mouvement relatif entre l'élément tubulaire supérieur (5) et l'élément tubulaire inférieur (4).

7. Support de structure de toit plat selon l'une quelconque des revendications 1 à 6, **caractérisé en ce qu'**aussi bien l'élément tubulaire supérieur (5) que l'élément tubulaire inférieur (4) sont galvanisés sur toute leur surface, notamment sur leur côté intérieur respectif (14, 15).

8. Support de structure de toit plat selon l'une quelconque des revendications 1 à 7, **caractérisé en ce que** le support de structure de toit plat (1) comprend un élément d'étanchéité (13), notamment un tuyau rétractable, pour rendre étanche la transition (31) entre le support de structure de toit plat (1) et un toit plat (30), notamment vis-à-vis d'un liquide.

9. Support de structure de toit plat selon l'une quelconque des revendications 1 à 8, **caractérisé en ce que** le support de structure de toit plat (1) comprend un manchon isolant extérieur (16) pour l'isolation thermique, et **en ce que** le manchon isolant extérieur (16) entoure au moins l'élément tubulaire supérieur (5).

10. Procédé de fabrication d'un support de structure de toit plat (1) pour le soutien permanent d'un objet (40) à monter de manière fixe au-dessus d'un toit plat (30), comme par exemple un équipement de bâtiment technique ou une terrasse de toit, sur le toit plat (30), le support de structure de toit plat (1) comprenant un élément tubulaire inférieur (4) et un élément tubulaire supérieur (5) réalisé séparément de l'élément tubulaire inférieur (4), un pied (2) du support de structure de toit plat (1) étant agencé sur l'élément tubulaire inférieur (4), une tête (3) du support de structure de toit plat (1) étant agencée sur l'élément tubulaire supérieur (5), l'élément tubulaire inférieur (4) possédant une extrémité d'élément tubulaire supérieure (6), qui est détournée du pied (2), l'élément tubulaire supérieur (5) possédant une extrémité d'élément tubulaire inférieure (7) qui est détournée de la tête (3), l'élément tubulaire inférieur (4) étant ouvert à son extrémité d'élément tubulaire supérieure (6), l'élément tubulaire supérieur (5) étant ouvert à son extrémité inférieure (7), l'élément tubulaire inférieur (4) étant d'abord fixé par son pied (2) sur le toit plat (30) lors du montage du support de structure de toit plat (1) sur le toit plat (30), et l'élément tubulaire supérieur (5) étant relié par son extrémité inférieure (7) à l'extrémité supérieure (6) de l'élément tubulaire inférieur (4) au cours d'une étape de procédé suivante ; avant de relier l'élément tubulaire inférieur (4) à l'élément tubulaire supérieur (5), un élément d'isolation intérieur (12) étant inséré dans l'élément tubulaire inférieur (4) pour isoler thermiquement le support de structure de toit plat (1), **caractérisé en ce que** l'élément d'isolation intérieur (12) fait saillie de l'élément tubulaire inférieur (4) et ensuite, lors de la liaison de l'élément tubulaire inférieur (4) à l'élément tubulaire supérieur (5), l'élément tubulaire supérieur (5) est retourné sur l'élément d'isolation intérieur (12).

11. Procédé selon la revendication 10,
**caractérisé en ce que** l'élément d'isolation intérieur (12) est inséré dans l'élément tubulaire inférieur (4) après la fixation de l'élément tubulaire inférieur (4) par son pied (2) sur le toit plat (30).

12. Procédé selon la revendication 10 ou 11,
**caractérisé en ce qu'**avant de relier l'élément tubulaire inférieur (4) à l'élément tubulaire supérieur (5), notamment après la fixation de l'élément tubulaire inférieur (4) par son pied (2) sur le toit plat (30), un élément d'étanchéité (13), notamment un tuyau rétractable, est enfilé sur l'élément tubulaire inférieur (4) ou sur l'élément tubulaire supérieur (5) pour assurer l'étanchéité de la transition (31) entre le support de structure de toit plat (1) et le toit plat (30).

13. Procédé selon l'une quelconque des revendications 1 à 12,
**caractérisé en ce qu'**une hauteur de support (h) du support de structure de toit plat (1) dans la direction longitudinale (50) du support de structure de toit plat (1) est réglée par un mouvement de l'élément tubulaire supérieur (5) par rapport à l'élément tubulaire inférieur (4), et notamment **en ce que** l'élément tubulaire supérieur (5) est ensuite bloqué contre un mouvement par rapport à l'élément tubulaire inférieur (4) au moyen d'un élément de blocage (11).

14. Procédé selon l'une quelconque des revendications 1 à 13,
**caractérisé en ce qu'**aussi bien l'élément tubulaire supérieur (5) que l'élément tubulaire inférieur (4) sont galvanisés sur toute leur surface dans le temps avant la liaison de l'élément tubulaire inférieur (4) à l'élément tubulaire supérieur (5), notamment avant le montage du support de structure de toit plat (1), notamment **en ce que** les côtés intérieurs respectifs (14, 15) de l'élément tubulaire inférieur (4) et de l'élément tubulaire supérieur (5) sont galvanisés sur toute leur surface.
